(19) Europäisches Patentamt
European Patent Office
Office européen des brevets

(11) EP 3 797 467 B1

(12) EUROPÄISCHE PATENTSCHRIFT

(45) Veröffentlichungstag und Bekanntmachung des Hinweises auf die Patenterteilung:
01.07.2026 Patentblatt 2026/27

(21) Anmeldenummer: 19778863.1

(22) Anmeldetag: 17.09.2019

(51) Internationale Patentklassifikation (IPC):
H02K 3/12 (2006.01)    H02K 17/12 (2006.01)
H02K 17/42 (2006.01)    H02K 3/28 (2006.01)
H02K 7/18 (2006.01)

(52) Gemeinsame Patentklassifikation (CPC):
H02K 7/183; H02K 3/12; H02K 3/28; H02K 17/12;
H02K 17/42; H02K 7/1815; Y02E 10/72

(86) Internationale Anmeldenummer:
PCT/EP2019/074808

(87) Internationale Veröffentlichungsnummer:
WO 2020/064416 (02.04.2020 Gazette 2020/14)

(54) **MAGNETISCH AKTIVE EINHEIT EINER MEHRPHASIGEN ROTIERENDEN ELEKTRISCHEN MASCHINE**

MAGNETIC ACTIVE UNIT OF A MULTIPHASE ROTATING ELECTRIC MACHINE

UNITÉ MAGNÉTIQUE ACTIVE D'UN MACHINE ÉLECTRIQUE ROTATIVE POLYPHASÉ

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR

(30) Priorität: 24.09.2018 EP 18196280

(43) Veröffentlichungstag der Anmeldung:
31.03.2021 Patentblatt 2021/13

(73) Patentinhaber: Flender GmbH
46395 Bocholt (DE)

(72) Erfinder:
• BRENNER, Robin
94148 Kirchham (DE)
• KOHLMEIER, Dominik
94060 Pocking (DE)
• OBERNEDER, Manuel
94124 Büchlberg (DE)
• SCHÖNBAUER, Norbert
94072 Bad Füssing (DE)
• SENNINGER, Karl-Heinz
84385 Egglham (DE)

(74) Vertreter: Michalski Hüttermann & Partner mbB
Kaistraße 16A
40221 Düsseldorf (DE)

(56) Entgegenhaltungen:
EP-A1- 2 940 860        EP-A1- 3 252 926
WO-A2-2013/034313       DE-A1- 102012 202 735

**Beschreibung**

Die vorliegende Erfindung betrifft eine magnetisch aktive Einheit einer mehrphasigen rotierenden elektrischen Maschine, die wenigstens zwei Pole aufweist, mit einem Blechpaket, welches eine Mehrzahl von Nuten aufweist, und wenigstens einer Wicklung für eine jeweilige der Phasen der elektrischen Maschine, wobei die Wicklungen jeweils wenigstens einen elektrischen Leiter aufweisen, der zum Ausbilden von den jeweiligen Polen zugeordneten Spulengruppen zumindest teilweise in mehreren vorgegebenen der Mehrzahl der Nuten des Blechpakets elektrisch isoliert angeordnet ist, wodurch Spulen der Spulengruppen ausgebildet sind, und wobei in den Nuten wenigstens zwei Abschnitte der elektrischen Leiter von wenigstens einer der Wicklungen voneinander elektrisch isoliert angeordnet sind. Die Erfindung betrifft ferner einen Ständer für eine rotierende elektrische Maschine und auch einen Läufer für eine rotierende elektrische Maschine sowie eine rotierende elektrische Maschine mit einem Ständer und einem in einer Öffnung des Ständers drehbar gelagert angeordneten Läufer.

Gattungsgemäße elektrische Maschinen, Ständer und auch Läufer hierfür sowie entsprechende magnetisch aktive Einheiten sind dem Grunde nach im Stand der Technik umfänglich bekannt, sodass es eines gesonderten druckschriftlichen Nachweises hierfür nicht bedarf. Dies gilt insbesondere für die magnetisch aktive Einheit, die im Ständer und/oder im Läufer vorgesehen sein kann.

Die magnetisch aktive Einheit ist eine Einheit, die dazu dient, in vorgebbarer Weise ein Magnetfeld bereitzustellen, sodass die rotierende elektrische Maschine bestimmungsgemäß genutzt werden kann. In der Regel ist sowohl im Ständer als auch im Läufer eine entsprechende magnetisch aktive Einheit vorgesehen. Darüber hinaus kann jedoch auch, insbesondere bei Asynchronmaschinen vorgesehen sein, dass die magnetisch aktive Einheit lediglich in einem Ständer vorgesehen ist, beispielsweise bei einem Kurzschlussläufer oder dergleichen.

Bei einer rotierenden elektrischen Maschine ist dem Grunde nach ein Ständer als Stator vorgesehen, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Die rotierende elektrische Maschine ist eine Vorrichtung, die elektrische Energie in mechanische Energie, insbesondere Bewegungsenergie in einem Motorbetrieb und/oder mechanische Energie in eine elektrische Energie in einem Generatorbetrieb umformt. Bei der Bewegung handelt es sich in der Regel um eine Drehbewegung, die vom Läufer ausgeführt wird. Der Ständer ist im Unterschied zum Läufer in der Regel drehfest angeordnet, das heißt, bei einer Drehbewegung handelt es sich um eine Drehbewegung des Läufers gegenüber dem Ständer.

Der Ständer und der Läufer der rotierenden elektrischen Maschine sind mittels eines magnetischen Flusses verkettet, wodurch im Motorbetrieb die Kraftwirkung beziehungsweise das Drehmoment erzeugt wird, die den Läufer gegenüber dem Ständer drehend antreibt. Im Generatorbetrieb wird dem Läufer zugeführte mechanische Energie beziehungsweise ein zugeführtes Drehmoment in Form einer Rotation in elektrische Energie umgewandelt. Zu diesem Zweck weist der Ständer und häufig auch der Läufer jeweils eine von einem elektrischen Strom durchflossene Wicklung auf. Im Ständer beziehungsweise im Läufer kann die Wicklung auch durch einen Permanentmagneten ersetzt oder zumindest teilweise ergänzt sein.

Rotierende elektrische Maschinen der gattungsgemäßen Art sind beispielsweise Drehfeldmaschinen, die an ein mehrphasiges, insbesondere dreiphasiges, elektrisches Wechselspannungsnetz angeschlossen sind, beispielsweise Asynchronmaschinen, Synchronmaschinen, Synchronmaschinen mit Dämpferkäfig oder dergleichen.

Die magnetisch aktive Einheit weist das Blechpaket auf, das seinerseits aus einzelnen, untereinander elektrisch isolierten ferromagnetischen Blechen besteht. Die Bleche können je nach Verwendungszweck auch als Dynamoblech, Motorenblech, Transformatorenblech oder dergleichen bezeichnet sein. Derartige Bleche unterliegen der Normung, beispielsweise EN 10106, EN 10107 oder dergleichen.

In das Blechpaket sind in der Regel die Nuten eingelassen, die üblicherweise radial in Bezug auf eine Maschinenachse der rotierenden elektrischen Maschine ausgebildet sind. In der Regel sind die Nuten an einer zum Luftspalt zwischen dem Ständer und dem Läufer gerichteten Oberfläche des Blechpakets ausgebildet. In diesen Nuten sind die elektrischen Leiter der Wicklungen beziehungsweise Spulengruppen angeordnet, damit in vorgebbarer Weise abhängig von einem die elektrischen Leiter durchströmenden elektrischen Strom im bestimmungsgemäßen Betrieb das erforderliche Magnetfeld bereitgestellt wird. Die Wicklung des Ständers ist somit häufig in das Blechpaket integriert ausgeführt.

Der Ständer nimmt somit üblicherweise die Reaktion in Bezug auf ein Läuferdrehmoment auf und stützt sich gegen eine Auflage ab, um drehfest angeordnet zu sein. Die Abstützung kann durch ein Fundament oder dergleichen gebildet sein. Das Blechpaket bezeichnet also einen aus ferromagnetischen Werkstoffen hergestellten und damit magnetisierbaren, schichtweise aufgebauten Körper. Die Aufgabe des Blechpakets besteht somit darin, in Verbindung mit den stromdurchflossenen Leitern der Spulengruppen den magnetischen Fluss zu bündeln und zu führen.

Der wenigstens eine elektrische Leiter der jeweiligen der Spulengruppen ist zumindest im Bereich der Anordnung in den Nuten elektrisch isoliert ausgebildet beziehungsweise elektrisch isoliert in den Nuten angeordnet. Die Isolation kann durch eine elektrisch isolierende Beschichtung, beispielsweise einen Lack, eine Isolierfolie, die auf einem äußeren Umfang des elektrischen Leiters angeordnet ist, und/oder dergleichen gebildet sein. Darüber hinaus kann die elektrische Isolierung natürlich auch durch Isolationselemente gebildet sein, die im angeordneten Zustand in der Nut zwischen dem Blechpaket und dem Leiter positioniert sind. Hierbei kann es sich zum Beispiel um Isolationsstreifen aus einem geeigneten Material handeln, mit dem eine ausreichende elektrische Isolation im bestimmungsgemäßen Betrieb erreicht werden kann, wie zum Beispiel Glimmer oder dergleichen.

Der Einsatz von rotierenden elektrischen Maschinen ist weit verbreitet. Zunehmend finden derartige elektrische Maschinen auch Einsatz bei Windenergieanwendungen. Hierbei erweisen sich insbesondere doppelt gespeiste Asynchronmaschinen als vorteilhaft, bei denen der Läufer mittels eines geeigneten Energiewandlers, beispielsweise ein Frequenzumrichter oder dergleichen entsprechend mit elektrischer Energie beaufschlagt wird. Dabei zeigt sich, dass ein Verhalten bezüglich der elektrischen Eigenschaften der rotierenden elektrischen Maschine unter anderem von einem Wicklungsübersetzungsverhältnis in einem Generatorbetrieb abhängig sein kann. Das Wicklungsübersetzungsverhältnis ist regelmäßig eine Kundenanforderung und ist üblicherweise in engen Grenzen einzuhalten. Das Wicklungsübersetzungsverhältnis kann durch Konfigurationen der Wicklungen im Ständer und im Läufer beeinflusst werden, insbesondere wenn die Wicklungen im Ständer und im Läufer unterschiedlich voneinander ausgebildet sind.

Für den Einsatz bei Wind- und Gezeitengeneratoren offenbart zum Beispiel die DE 10 2012 202 735 A1 eine dynamoelektrische Maschine mit einer Einschichtbruchlochwicklung.

Die EP2940860 A1 beschreibt eine ähnliche mehrphasige dynamoelektrische Maschine.

Eine Einstellung des Wicklungsübersetzungsverhältnisses unterliegt bestimmten Anforderungen hinsichtlich umsetzbarer Nutzahl-, Windungs-, Schaltungs- und Sehnungskonfigurationen im Ständer und im Läufer. Aus diesem Grund können einige Wicklungsübersetzungsverhältnisse mit Standardkonfigurationen nicht immer realisiert werden, wodurch eine entsprechende Kundenanforderung und die damit optimale Nutzung der Windenergieanlage nicht immer erreicht werden kann.

Der Erfindung liegt die Aufgabe zugrunde, eine magnetisch aktive Einheit, insbesondere für eine doppelt gespeiste Asynchronmaschine, dahingehend weiterzubilden, dass eine verbesserte Konfiguration insbesondere in Bezug auf Übersetzungsverhältnisse erreicht werden kann.

Als Lösung werden mit der Erfindung eine magnetisch aktive Einheit, ein Läufer, ein Ständer sowie auch eine rotierende elektrische Maschine gemäß den unabhängigen Ansprüchen vorgeschlagen.

Vorteilhafte Weiterbildungen ergeben sich durch Merkmale der abhängigen Ansprüche.

Bezüglich einer gattungsgemäßen magnetisch aktiven Einheit wird insbesondere vorgeschlagen, dass wenigstens eine erste der Spulengruppen einer der Wicklungen eine erste Anzahl von Spulen aufweist, die von einer zweiten Anzahl von Spulen einer zweiten der Spulengruppen der gleichen Wicklung abweicht.

Bezüglich eines gattungsgemäßen Läufers und eines gattungsgemäßen Ständers wird insbesondere vorgeschlagen, dass dieser eine magnetisch aktive Einheit gemäß der Erfindung aufweist.

Bezüglich einer gattungsgemäßen rotierenden elektrischen Maschine wird insbesondere vorgeschlagen, dass diese einen Ständer und/oder einen Läufer gemäß der Erfindung aufweist.

Die Erfindung basiert auf dem Gedanken, dass durch die abweichende Anzahl der Spulen einer jeweiligen der Spulengruppen, insbesondere bei Berücksichtigung einer geraden Anzahl von Polen der magnetisch aktiven Einheit, das Magnetfeld derart beeinflusst werden kann, dass zum Beispiel das Wicklungsübersetzungsverhältnis besser eingestellt werden kann, wodurch dann zum Beispiel Kundenanforderungen und damit eine verbesserte Ausnutzung einer Windenergieanwendung erreicht werden kann. Die Erfindung ermöglicht es dadurch, eine verteilte Zweischicht-Bruchloch-Wellen- und/oder Formspulenschleifenwicklung im Läufer und/oder auch im Ständer zu realisieren, sodass zusätzliche elektrische Wicklungsübersetzungsverhältnisse realisiert werden können und damit Kundenanforderungen flexibler erreicht werden können. Die verteilte Zweischicht-Bruchloch-Wellen- und/oder Formspulenschleifenwicklung der magnetisch aktiven Einheit kann durch eine nicht ganzzahlige Lochzahl charakterisiert werden.

Die Lochzahl ergibt sich dabei aus der Anzahl der Nuten der magnetisch aktiven Einheit im Verhältnis zu einem Produkt aus den Phasen der elektrischen Maschine und der Polzahl. Sie kann zum Beispiel in der Form

$$q + (q_Z / q_N)$$

angegeben werden, wobei q eine ganze Zahl, insbesondere eine natürliche Zahl, ist. Insbesondere bei verteilten Zweischicht-Bruchloch-Wellenwicklungen von im Läufer angeordneten magnetisch aktiven Einheiten sollte die Aufteilung der Spulengruppen beachtet werden, um die Ausführung der Wellenwicklung besser realisieren zu können.

Beispielsweise kann eine verteilte Zweischicht-Bruchloch-Wellenwicklung bei einer 4-poligen rotierenden elektrischen Maschine mit einer Lochzahl q + (1/4), auch Viertellochwicklung genannt, drei Spulengruppen mit einer Anzahl von q Spulen und eine Spulengruppe mit einer Anzahl von q + 1 Spulen aufweisen. Um die Ausführbarkeit der Wellenwicklung zur gewährleisten, sollten bei Ausführung der Phaseneingänge und der Schaltung auf der kurzen Schaltseite der Wicklung die Stäbe vorzugsweise in der Unterlage einer Spulengruppe in positivem Umlaufsinn um mehr als eine Polteilung versetzt zu den Stäben in der Oberlage der gleichen Spulengruppe sein. Sind die Phaseneingänge und die Schaltung auf der langen Schaltseite der Wicklung realisiert, so sollten die Stäbe in der Unterlage einer Spulengruppe in positivem Umlaufsinn weniger als eine Polteilung von den Stäben in der Oberlage der gleichen Spulengruppe entfernt sein.

Eine verteilte Zweischicht-Bruchloch-Wellenwicklung bei einer 4-poligen rotierenden elektrischen Maschine mit einer Lochzahl von q + (3/4) kann zum Beispiel eine Spulengruppe mit einer Anzahl von q Spulen und drei Spulengruppen mit einer Anzahl von q + 1 Spulen aufweisen. Um die Ausführbarkeit der Wellenwicklung zu gewährleisten, sollten bei Ausführung der Phaseneingänge und der Schaltung auf der kurzen Schaltseite der Wicklung die Stäbe vorzugsweise in der Unterlage einer Spulengruppe in positivem Umlaufsinn um mehr als eine Polteilung versetzt zu den Stäben in der Oberlage der gleichen Spulengruppe sein. Sind die Phaseneingänge und die Schaltung auf der langen Schaltseite der Wicklung realisiert, so sollten die Stäbe in der Unterlage einer Spulengruppe in positivem Umlaufsinn vorzugsweise weniger als eine Polteilung von den Stäben in der Oberlage der gleichen Spulengruppe entfernt sein.

Die Erfindung betrifft somit eine magnetisch aktive Einheit einer mehrphasigen rotierenden elektrischen Maschine, die wenigstens zwei Pole aufweist, mit einem Blechpaket, welches eine Mehrzahl von Nuten aufweist, und wenigstens einer Wicklung für eine jeweilige der Phasen der elektrischen Maschine, wobei die Wicklungen jeweils wenigstens einen elektrischen Leiter aufweisen, der zum Ausbilden von den jeweiligen Polen zugeordneten Spulengruppen zumindest teilweise in mehreren vorgegebenen der Mehrzahl der Nuten des Blechpakets elektrisch isoliert angeordnet ist, wodurch Spulen der Spulengruppen ausgebildet sind, und wobei in den Nuten wenigstens zwei elektrische Leiter von wenigstens einer der elektrischen Spulen voneinander elektrisch isoliert angeordnet sind.

Durch die abweichende Anzahl der Spulen der Spulengruppen einer jeweiligen der Wicklungen kann das Magnetfeld der aktiven Einheit derart beeinflusst werden, dass eine Flexibilität in Bezug auf das Wicklungsübersetzungsverhältnis verbessert, insbesondere erhöht, werden kann. Insofern schafft die Erfindung die Möglichkeit, die Funktionalität der rotierenden elektrischen Maschine weiter zu verbessern. Vorzugsweise kann die Funktionalität bei einer doppelt gespeisten Asynchronmaschine in Bezug auf das Wicklungsübersetzungsverhältnis und damit auf eine Läuferstillstandsspannung und einen Drehzahlbereich verbessert werden. Die magnetisch aktive Einheit kann sowohl bei einem Ständer als auch bei einem Läufer vorgesehen sein. Natürlich können auch sowohl der Ständer als auch der Läufer eine entsprechende magnetisch aktive Einheit aufweisen. Darüber hinaus braucht die Anzahl der Pole bei einem Läufer nicht der Anzahl der Pole bei einem Ständer zu entsprechen. Je nach Bedarf kann hier auch eine Abweichung vorgesehen sein.

Die Abschnitte der elektrischen Leiter sind in den Nuten zweilagig angeordnet. Die zweilagige Anordnung bezieht sich insbesondere auf eine radiale Richtung in Bezug auf die Maschinenachse. Hierdurch lässt sich ein besonders einfacher Aufbau für die magnetisch aktive Einheit erreichen. Die Leiter können in den Nuten radial übereinander angeordnet sein. Darüber hinaus besteht natürlich auch die Möglichkeit, dass die zwei elektrischen Leiter in den Nuten in Umfangsrichtung unmittelbar benachbart zueinander angeordnet sind. Je nach Bedarf kann eine entsprechende Anordnung gewählt werden, insbesondere unter Berücksichtigung von weiteren konstruktiven Aspekten wie der elektrischen Isolation, dem elektrischen Anschluss und/oder dergleichen. Auch eine Kombination hiervon kann vorgesehen sein. Querschnittsflächen der Leiter können an die Anordnung in den Nuten angepasst ausgebildet sein.

Eine erste Anzahl von Spulen einer jeweiligen Spulengruppe ist von einer zweiten Anzahl von Spulen einer der weiteren Spulengruppen der gleichen Phase verschieden. Auf diese Weise lässt sich die Erfindung besonders einfach realisieren, indem nämlich die Anzahl der Spulen aller Spulengruppen voneinander abweichend gewählt wird. Durch eine entsprechende Verschaltung mittels des Wicklungskopfes kann dies auf einfache Weise realisiert werden. Dadurch können bereits bestehende Basiskonstruktionen von magnetisch aktiven Einheiten sowie auch Herstellungsverfahren weiter genutzt werden. Die Erfindung kann somit mit bestehenden Mitteln auch nachträglich bei einer Fertigung von magnetisch aktiven Einheiten auf einfache Weise realisiert werden.

Es wird ferner vorgeschlagen, dass die Abschnitte der elektrischen Leiter in den Nuten in Bezug auf eine Maschinenachse radialen Lagen angeordnet sind, wobei eine jeweilige Lage durch wenigstens einen der elektrischen Leiter gebildet ist. Die Maschinenachse entspricht vorzugsweise einer Drehachse des Läufers. Hierdurch kann eine besonders einfache Herstellung der magnetisch aktiven Einheit gemäß der Erfindung erreicht werden. Beispielsweise kann vorgesehen sein, dass die Abschnitte der elektrischen Leiter radial übereinander in einer jeweiligen der Nuten angeordnet sind. Dadurch kann ein stapelartiger Aufbau der Abschnitte der elektrischen Leiter in der jeweiligen Nut innerhalb einer einzelnen Nut erreicht werden, sodass ein guter Füllfaktor erreicht werden kann.

Weiterhin wird vorgeschlagen, dass ein Spuleneingang einer jeweiligen der Spulengruppe an einer jeweiligen Spule der Oberlage ausgebildet ist. Dies ermöglicht einen besonders günstigen Zugang für einen elektrischen Anschluss der magnetisch aktiven Einheit. Als besonders vorteilhaft erweist sich dies, wenn die magnetisch aktive Einheit bei einem Läufer der rotierenden elektrischen Maschine zum Einsatz kommt. Vorzugsweise sind die Spuleneingänge an einer nicht-Antriebsseite der rotierenden elektrischen Maschine, insbesondere einer doppelt gespeisten Asynchronmaschine, ausgebildet. Alternativ können sie zumindest teilweise jedoch auch an einer Antriebsseite der rotierenden elektrischen Maschine ausgebildet sein.

Gemäß einer Weiterbildung wird vorgeschlagen, dass für jede der Phasen nur eine einzige jeweilige Wicklung, insbesondere nur ein einziger elektrischer Leiter für eine jeweilige der Wicklungen, vorgesehen ist. Dadurch kann insgesamt ein einfacher Aufbau der magnetisch aktiven Einheit und damit auch der rotierenden elektrischen Maschine erreicht werden. Darüber hinaus können sich insbesondere in Bezug auf einen Betrieb der rotierenden elektrischen Maschine in Verbindung mit einem Energiewandler beispielsweise einem Wechselrichter, einem Umrichter oder dergleichen Vorteile ergeben, wenn für jede der Phasen nur eine einzige Wicklung elektrisch versorgt zu werden braucht. Besonders vorteilhaft erweist sich dies ferner für Asynchronmaschinen, die im Bereich der Windenergiewendungen eingesetzt werden sollen. Dadurch kann insbesondere in Bezug auf eine doppeltgespeiste Asynchronmaschine eine besonders günstige Konstellation erreicht werden.

Es wird ferner vorgeschlagen, dass die Wicklung als Wellenwicklung ausgebildet ist. Eine Wellenwicklung ist dadurch gekennzeichnet, dass im Wicklungszug aufeinanderfolgende Spulen unter aufeinanderfolgenden Polpaaren liegen. Eine besonders günstige Herstellung sowie auch eine besonders günstige Bereitstellung eines Magnetfelds im bestimmungsgemäßen Betrieb und eine robuste Wicklungsausführung können erreicht werden.

Schließlich wird vorgeschlagen, dass die Wicklungen als Formspulenwicklungen ausgebildet sind. Vorzugsweise sind die elektrischen Leiter der Wicklungen an die Nuten angepasst ausgebildet, sodass ein möglichst großer Füllfaktor erreicht werden kann. Die elektrischen Leiter können durch einzelne elektrisch leitfähige Stäbe gebildet sein, die in den jeweiligen Nuten angeordnet sind und mittels geeigneter Wicklungsköpfe an Stirnseiten der rotierenden elektrischen Maschine in geeigneter Weise elektrisch verschaltet werden, um die gewünschte magnetisch aktive Einheit erhalten zu können. Besonders vorteilhaft erweist es sich, wenn die Leiterstäbe bereits eine elektrische Isolation umfassen, sodass mit dem Anordnen der Leiterstäbe in den Nuten zugleich auch eine geeignete elektrische Isolation gegenüber dem Blechpaket beziehungsweise weiteren, in den jeweiligen Nuten angeordneten elektrischen Leitern bereitgestellt werden kann. Insgesamt können auch hierfür bereits vorhandene Herstellverfahren genutzt werden, sodass die Herstellung der magnetisch aktiven Einheit gemäß der Erfindung weiter verbessert werden kann.

Die für die magnetisch aktive Einheit angegebenen Vorteile und Wirkungen gelten natürlich gleichermaßen auch für den mit der magnetisch aktiven Einheit ausgerüsteten Ständer beziehungsweise Läufer sowie der mit einem solchen Ständer beziehungsweise einem solchen Läufer ausgerüsteten elektrischen Maschine und umgekehrt.

Weitere Vorteile und Merkmale ergeben sich aus den folgenden Ausführungsbeispielen anhand der beigefügten Figuren. In den Figuren bezeichnen gleiche Bezugszeichen gleiche Merkmale und Funktionen.

Es zeigen:

FIG 1  eine schematische Darstellung von Nutbelegungen mit hervorgehobenen Spulengruppen einer Zweischicht-Bruchloch-Stab-Wellenwicklung mit einer Lochzahl q2 = 5,75 im Läufer einer vierpoligen doppeltgespeisten Asynchronmaschine für einen Betrieb an einem dreiphasigen Wechselspannungsnetz;

FIG 2  eine schematische Schaltbilddarstellung aller drei Phasen der Zweischicht-Bruchloch-Stab-Wellenwicklung mit Lochzahl q2 = 5,75 im Läufer einer vierpoligen doppeltgespeisten Asynchronmaschine gemäß FIG 1;

FIG 3  eine schematische Schaltbilddarstellung wie FIG 2, bei der jedoch, aus Gründen der Übersichtlichkeit, nur eine Phase dargestellt ist; und

FIG 4  eine schematische Schnittansicht einer doppelt gespeisten Asynchronmaschine mit einem in einem Ständer drehbar gelagerten Läufer.

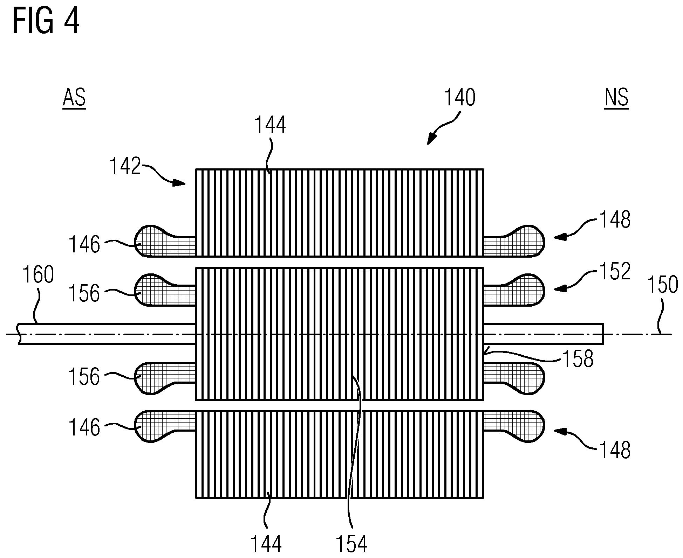

FIG 4 zeigt in einer schematischen Schnittdarstellung eine rotierende elektrische Maschine, die vorliegend als doppelt gespeiste Asynchronmaschine 140 für einen Anschluss an ein nicht weiter dargestelltes dreiphasiges Wechselspannungsnetz ausgebildet ist, und die einen Ständer 142 aufweist, der drehfest angeordnet ist. Der Ständer 142 weist ein Ständerblechpaket 144 auf, in welchem eine Ständerwicklung 146 angeordnet ist. In FIG 4 sind von der Ständerwicklung 146 die längsseitig über das Ständerblechpaket 144 hinausragenden Wicklungsköpfe 148 sichtbar. Der Schnitt in FIG 4 ist vorliegend ein Längsschnitt entlang einer Drehachse 150 eines Läufers 152 vorgesehen.

Der Läufer 152 ist in der Asynchronmaschine 140 drehbar angeordnet und über nicht weiter dargestellte Lagerungen gegenüber dem Ständer 142 in seiner Position drehbar festgelegt. Der Läufer 152 weist ein Läuferblechpaket 154 auf, welches eine Läuferwicklung 156 umfasst. An stirnseitigen Enden 158 des Läuferblechpakets 154 sind jeweils nicht bezeichnete Wicklungsköpfe vorgesehen. Das Läuferblechpaket 154 und die Läuferwicklung 156 bilden eine erste magnetisch aktive Einheit. Ebenso bildet das Ständerblechpaket 144 mit der Ständerwicklung 146 eine zweite magnetisch aktive Einheit.

Der Läufer 152 weist ferner eine Läuferwelle 160 auf. Seine Antriebsseite AS dient zur Verbindung mit einer rotierbaren mechanischen Einrichtung. Die rotierbare mechanische Einrichtung kann eine beliebige Funktion aufweisen, beispielsweise eine Antriebsfunktion für eine Industriemaschine, ein elektrisch antreibbares Kraftfahrzeug und/oder dergleichen. Darüber hinaus kann die mechanische Einrichtung natürlich auch ein verbrennungskraftbetriebener Motor, ein Windrad und/oder dergleichen sein. Je nach Betriebsart kann der Asynchronmaschine 140 mechanische Energie in Form der Drehbewegung zugeführt werden, so dass die Asynchronmaschine 140 in einem Generatormodus betrieben werden kann, oder die Asynchronmaschine 140 kann durch über das an ihr angeschlossene elektrische Energieversorgungsnetz elektrische Energie beziehen und über den Läufer 152 und die Läuferwelle 160 ein Drehmoment im Motorbetrieb bereitstellen. Über nicht dargestellte Schleifringe des Läufers 152 ist die Läuferwicklung 156 an einen Umrichter angeschlossen, mittels dem die Läuferwicklung 156 in vorgebbarer Weise mit elektrischer Energie beaufschlagt wird, um eine doppelt gespeiste Asynchronmaschine zu bilden.

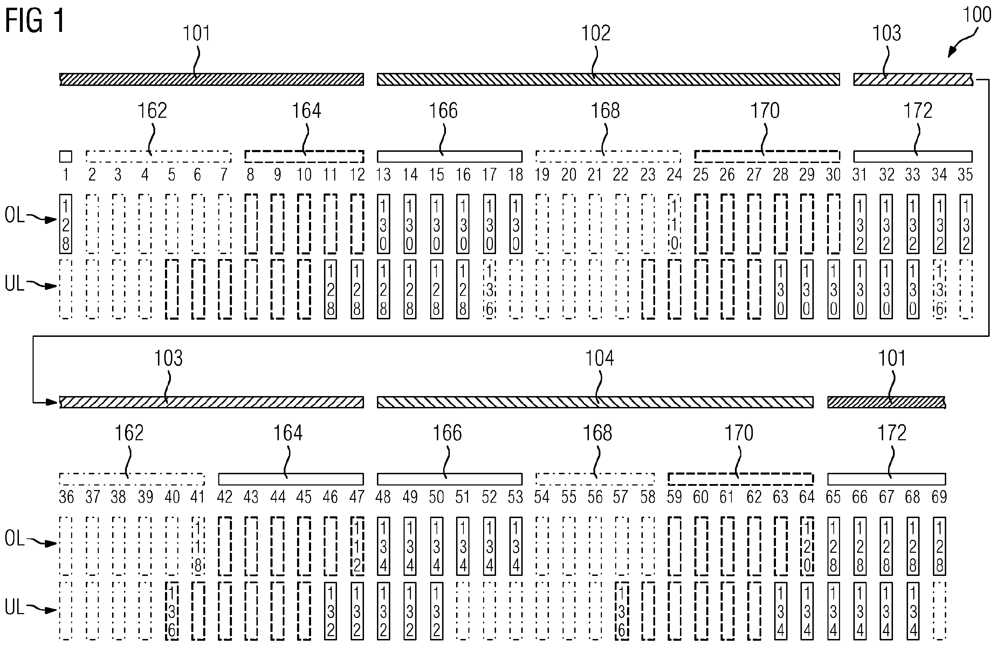

Die Läuferwicklung 156 weist vorliegend für jede der drei Phasen, die vom Umrichter beaufschlagt werden, eine eigene Wicklung 116, 118, 120 auf. Das Ausführungsbeispiel der Läuferwicklung 156 ist anhand der FIG 1 bis 3 im Folgenden erläutert. Das Ausführungsbeispiel ist jedoch nicht auf die Anwendung bei einem Läufer beschränkt, sondern kann dem Grunde nach auch bei dem Ständer 142 realisiert werden.

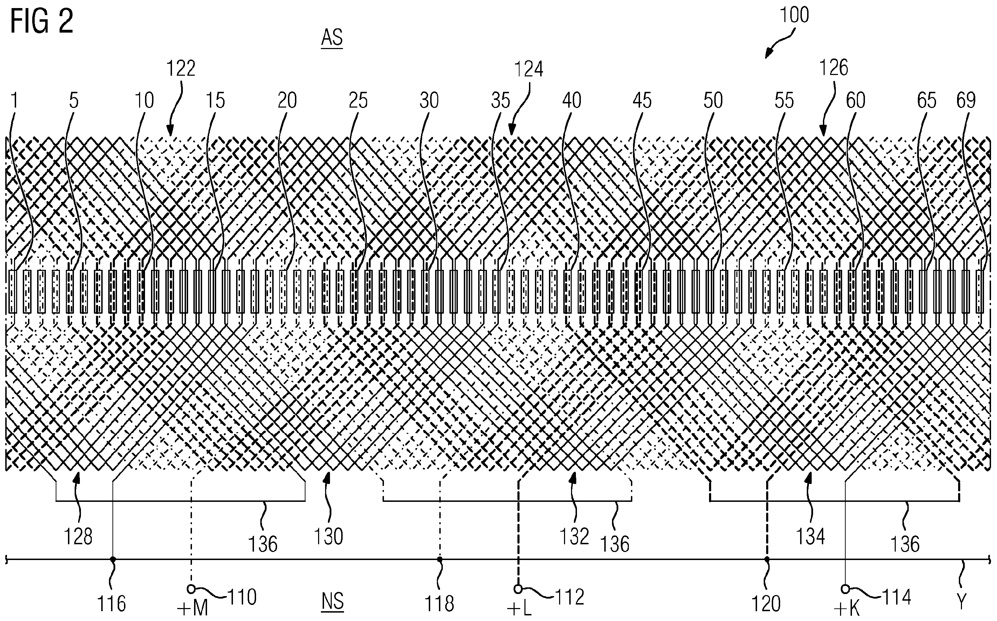

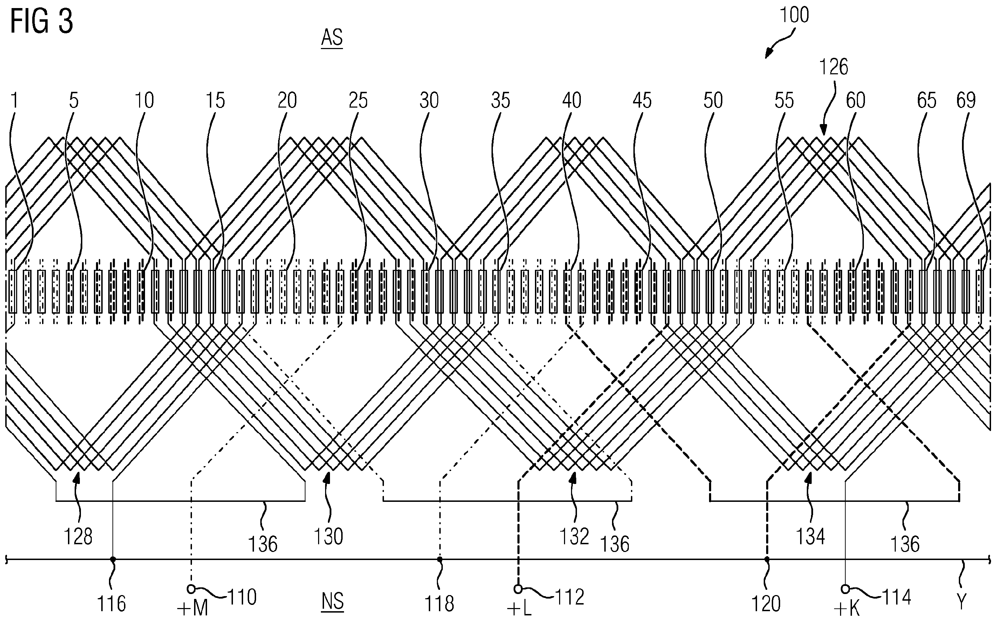

In den FIG 1 bis 3 sind schematisch eine Nutbelegung und Schaltbilddarstellungen für ein Beispiel einer Zweischicht-Bruchloch-Stab-Wellenwicklung mit einer Lochzahl q2 = q + $q_Z/q_N$ = 5,75 = 5 + 3/4 im Läufer 152 der vierpoligen doppeltgespeisten Asynchronmaschine 140 mit Polen 101, 102, 103 und 104 dargestellt. In den Figuren 2 und 3 entspricht ferner eine obere Seite einer Antriebsseite eines Läufers 152, wohingegen eine untere Seite einer Nicht-Antriebsseite dieses Läufers 152 entspricht.

Die Asynchronmaschine 140 ist vorliegend dreiphasig mit den Läuferwicklungen K, L, M ausgebildet. Auf einer Nicht-Antriebsseite NS/NDE sind Wicklungsanschlüsse +K, +L, +M vorgesehen, die über jeweilige, nicht dargestellte Schleifkontakte in der Schleifringeinheit des Läufers 152 der doppeltgespeisten Asynchronmaschine 140 kontaktiert werden können, um den Phasen K, L, M zugeordnete Wicklungen 122, 124, 126 in vorgebbarer Weise elektrisch zu beaufschlagen, die Wicklungspole 162 bis 172 ausbilden. Die Phasenausgänge 116, 118, 120 sind bei Sternschaltung an einem gemeinsamen Anschlusspunkt Y angeschlossen, welcher damit einen Sternpunkt bildet.

Die Darstellung der Belegungen der Nuten 1 bis 69 in FIG 1 erfolgt in zwei Zeilen. Diese FIG zeigt die Phasenzuordnungen und Polarität von Stäben in Ober- und Unterlagen der zweischichtigen Wicklung in den jeweiligen Nuten 1 bis 69. Nach rechts ergeben sich aufsteigende Nutnummern beginnend bei Nutnummer 1, wodurch gleichzeitig der positive Umlaufsinn der Wicklung definiert sei. Die jeweilige Oberlage einer Nut 1 bis 69 ist mit OL bezeichnet und oberhalb einer jeweiligen Unterlage UL dargestellt.

Für die Phase K sind beispielhaft die vier Spulengruppen 128, 130, 132, 134 dargestellt. Die Unterlage UL einer Spulengruppe 128, 130, 132, 134 befindet sich in positivem Umlaufsinn unter dem Nachbarpol der Stäbe in der Oberlage OL der gleichen Spulengruppe. Sie sind dabei aber weniger als eine Polteilung von den Stäben in der Oberlage OL der gleichen Spulengruppe entfernt.

Die Polteilung umfasst im vorliegenden Beispiel 69/4 = 17,25 Nuten, wohingegen die Spulenweite 15 Nuten umfasst. Aufgrund der Verkürzung eines Abstandes von Ober- und Unterlage einer Spulengruppe um 17,25 - 15 = 2,25 Nuten gegenüber einer Durchmesserwicklung, denn hier entspricht der Abstand von Ober- und Unterlage einer Spulengruppe der Polteilung, ergibt sich eine gesehnte Zweischicht-Bruchloch-Stab-Wellenwicklung.

Bei verkürztem oder verlängertem Schritt der Spulen ergibt sich bei der Wellenwicklung eine lange und eine kurze Schaltseite. Phaseneingänge 110, 112, 114 und die Schaltung der Phasen K, L, M können entweder auf der kurzen oder langen Schaltseite ausgeführt werden, sind bei doppeltgespeisten Asynchronmaschinen aber vorzugsweise auf einer Nicht-Antriebsseite NS angeordnet. Zugeordnete Phasenausgänge sind mit 116, 118, 120 bezeichnet. Im vorliegenden Beispiel ist die lange Schaltseite auf der Nicht-Antriebsseite NS und somit die kurze Schaltseite auf der Antriebsseite AS ausgeführt.

Die Besonderheit dieser Wicklungsausführung im Vergleich zu vierpoligen Zweischicht-Ganzloch-Stab-Wellenwicklungen liegt in der abweichenden Anzahl an Spulen der vier Spulengruppen 128, 130, 132, 134. Bei Ganzlochwicklungen umfasst eine Spulengruppe eine Anzahl Spulen, die der Lochzahl entspricht. Bei der vorliegenden Wicklungsausführung mit q2 = q + $q_Z/q_N$ = 5,75 = 5 + 3/4 kann dem Nutbelegungsplan gemäß FIG 1 entnommen werden, dass die Wicklung drei Spulengruppen mit sechs Spulen 128, 130, 134 und eine Spulengruppe mit fünf Spulen 132 umfasst.

FIG 2 und 3 zeigen in einer schematischen Schaltbilddarstellung eine magnetisch aktive Einheit 100 einer mehrphasigen elektrischen Maschine gemäß einer Ausgestaltung, die vorliegend als doppeltgespeiste Asynchronmaschine ausgeführt ist. In FIG 2 und 3 wird dabei das Beispiel aus FIG 1 aufgegriffen. FIG 3 zeigt nur die Wicklung der Läuferphase K aus FIG 2.

Die magnetisch aktive Einheit 100, in diesem Fall der Läufer 152 der doppeltgespeisten Asynchronmaschine 140 mit Zweischicht-Bruchloch-Stab-Wellenwicklung, ist ausgebildet, mittels jeder der Wicklungen 122, 124, 126 vier magnetische Pole 101, 102, 103, 104 auszuprägen. Die magnetisch aktive Einheit 100 weist ferner Läuferblechpaket 154 auf, welches eine Mehrzahl von Nuten, nämlich die Nuten 1 bis 69, umfasst. Die Nuten 1 bis 69 sind in den FIG 2 und 3 schematisch durch schlanke Rechtecke dargestellt, die entsprechend nummeriert sind.

Die Stäbe in der Oberlage OL der Nuten 1 bis 69 sind durch die rechtsliegenden Linien in den Nuten 1 bis 69 dargestellt, wohingegen die Stäbe in der Unterlage UL der Nuten 1 bis 69 durch die linksliegenden Linien in den Nuten 1 bis 69 dargestellt sind.

Die Asynchronmaschine 140 ist vorliegend als dreiphasige Asynchronmaschine ausgeführt. Entsprechend umfasst der Läufer 152 als magnetisch aktive Einheit 100 für jede der drei Phasen K, L, M genau eine der Wicklungen 122, 124, 126. Die Wicklungen der drei Phasen K, L, M weisen vorliegend zur Ausbildung der magnetischen Pole 101, 102, 103, 104 jeweils einen einzigen Phaseneingang 110, 112, 114 und -ausgang 116, 118, 120 auf. Somit sind alle Spulengruppen 128, 130, 132, 134 der Wellenwicklung der einzelnen Phasen K, L, M in Reihe geschaltet. Eine Parallelschaltung von Spulengruppen 128, 130, 132, 134 würde in diesem vorliegenden Fall zu einer unsymmetrischen Aufteilung führen, wovon abzusehen ist. Die Spulen der Spulengruppen, zum Beispiel 128, 130, 132, 134 der Phase K, sind in den Nuten des Blechpakets der magnetisch aktiven Einheit elektrisch isoliert angeordnet.

In FIG 2 und 3 ist der Phaseneingang 114 der Phase K 114 durch den Oberstab der Spulengruppe 128 in Nut 1 ausgeführt. Wird die Wicklung von hier an in positivem Wicklungssinne durchlaufen, so werden zunächst die Stäbe in der Oberlage OL der Spulengruppe 128, die Stäbe in der Unterlage UL der Spulengruppe 128, die Stäbe in der Oberlage OL der Spulengruppe 132 und die Stäbe in der Unterlage UL der Spulengruppe 132 bis zu einem Umkehrstab 136 durchlaufen. Nach dem Umkehrstab 136 ergibt sich der umgekehrte und damit negative Umlaufsinn und es werden in dieser Reihenfolge die Stäbe in der Unterlage UL der Spulengruppe 134, die Stäbe in der Oberlage OL der Spulengruppe 134, die Stäbe in der Unterlage UL der Spulengruppe 130 und die Stäbe in der Oberlage OL der Spulengruppe 130 bis zum Phasenausgang 116 der Phase K durchlaufen.

Um im vorliegenden Fall die Ausführung der Zweischicht-Bruchloch-Stab-Wellenwicklung zu ermöglichen, ist der Phaseneingang in positivem Umlaufsinn im am weitesten rechtsliegenden Oberstab der Spulengruppe 128 zu wählen, wenn Phaseneingänge und Schaltung auf der langen Schaltseite der Wicklung angeordnet sind. Diese Spulengruppe ist in positivem Umlaufsinn zwei Gruppen von Spulengruppe 132 entfernt, welche als einzige fünf Spulen und damit eine Spule weniger als die drei weiteren Spulengruppen 128, 130, 134 aufweist. Im sechsten und letzten Wellenzug im positiven Durchlauf der Wellenwicklung wird die Spulengruppe 132 nicht mehr durchlaufen, sondern die Umkehr des Umlaufsinns bereits im am weitesten links liegenden Unterstab der Spulengruppe 128 vollzogen und damit vor Spulengruppe 132. Nach Umkehr des Umlaufsinns werden in sechs Wellenzügen, entsprechend der Anzahl an Spulen jeder Spulengruppe, die übrigen zwei Spulengruppen 130 und 134 bis zum Phasenausgang 116 durchlaufen.

Für die Läuferphasen L und M ergibt sich die Wicklung in gleicher Weise durch Verschiebung der Phaseneingänge um 23 Nuten (Phase M - 110) beziehungsweise 46 Nuten (Phase L - 112).

Eine weitere Ausführung mit den gleichen Nutbelegungen ergibt sich bei Verschiebung des Phaseneingangs der Läuferphase K in positivem Umlaufsinn zum am weitesten rechtsliegenden Oberstab der Spulengruppe 134. Diese Spulengruppe befindet sich in positivem Umlaufsinn unmittelbar vor der Spulengruppe mit q = 5 Spulen. Die Oberstäbe dieser Spulengruppe weisen jedoch entgegengesetzte Polarität im Vergleich zu den Oberstäben von Spulengruppe 128 auf. Dies muss bei der Wicklungskontaktierung beachtet werden. Für die Läuferphasen L und M ergibt sich die Wicklung durch Verschiebung in gleicher Weise wie zum oben beschriebenen Fall.

Ebenso können Phaseneingänge und die Schaltung der Läuferwicklung auf der kurzen Schaltseite ausgeführt werden. Die Spulenweite einer Spule einer Spulengruppe 128, 130, 132, 134 ist in diesem Fall größer als die Polteilung. Der Phaseneingang der Läuferphase K ist dann im am weitesten rechtsliegenden Oberstab der Spulengruppe mit q + 1 Spulen, welche in positivem Umlaufsinn zwei Gruppen von der Spulengruppe mit q Spulen entfernt liegt, zu wählen. Für die Läuferphasen L und M ergibt sich die Wicklung durch Verschiebung in gleicher Weise wie zum oben beschriebenen Fall.

Als weitere Möglichkeit kann der Phaseneingang der Läuferphase K auf der kurzen Schaltseite im am weitesten rechtsliegenden Oberstab der Spulengruppe mit q + 1 Spulen, welche in positivem Umlaufsinn unmittelbar vor der Spulengruppe mit q Spulen liegt, gewählt werden. Für die Läuferphasen L und M ergibt sich die Wicklung durch Verschiebung in gleicher Weise wie zum oben beschriebenen Fall.

Die beschriebenen Ausgestaltungen beschreiben somit eine Zweischicht-Bruchloch-Stab-Wellenwicklung mit Lochzahl $q2 = q + q_Z/q_N = 5,75 = 5 + 3/4$ und erlauben es, die Wicklungskonfiguration so zu beeinflussen, dass zusätzliche elektrische Übersetzungsverhältnisse im Vergleich zu reinen Ganzlochwicklungen realisiert werden, um damit die Kundenanforderung genauer erreichen zu können.

Die Wicklungen der drei Phasen 122, 124, 126 der magnetisch aktiven Einheit 100 sind im vorliegenden Fall als zweischichtige Stab-Wellenwicklungen ausgeführt. Dem Grunde nach kann die mehrphasige Wicklung auch als Schleifenwicklung mit Formspulen und mit gleichen Nutbelegungen realisiert werden.

Das Ausführungsbeispiel dient ausschließlich der Erläuterung der Erfindung und soll diese nicht beschränken. Insbesondere wird darauf hingewiesen, dass das Ausführungsbeispiel zwar einen Läufer einer vierpoligen doppeltgespeisten Asynchronmaschine betrifft, jedoch die Anzahl der Pole auch abweichend hiervon gewählt sein kann, ohne den Gedanken der Erfindung zu verlassen. Die Erfindung ist natürlich gleichermaßen auch bei einem Ständer anwendbar. Im Übrigen ist die Erfindung nicht darauf beschränkt, bei doppeltgespeisten Asynchronmaschinen genutzt zu werden, sondern sie kann natürlich auch bei anderen mehrphasigen rotierenden elektrischen Maschinen entsprechend zum Einsatz kommen.

Derartige mehrphasige rotierende elektrische Maschinen werden beispielsweise als Generatoren bei Windkraftanlagen eingesetzt. Erfindungsgemäß kann dabei der Drehzahlbereich bzw. der Strombedarf am Generator erweitert bzw. reduziert werden. Dadurch kann das Windkennfeld einer Windkraftturbine besser ausgenutzt und/oder der Frequenzumrichter der Windkraftanlage günstiger dimensioniert werden.

**Patentansprüche**

1. Magnetisch aktive Einheit (100) einer mehrphasigen rotierenden elektrischen Maschine (140), die wenigstens zwei Pole (101, 102, 103, 104) aufweist, mit

    - einem Blechpaket (152), welches eine Mehrzahl von Nuten (1 bis 69) aufweist, und
    - wenigstens einer Wicklung (122, 124, 126) für eine jeweilige der Phasen (L, M, K) der elektrischen Maschine (140), wobei die Wicklungen (122, 124, 126) jeweils wenigstens einen elektrischen Leiter aufweisen, der zum Ausbilden von den jeweiligen Polen (101, 102, 103, 104) zugeordneten Spulengruppen (128, 130, 132, 134) zumindest teilweise in mehreren vorgegebenen der Mehrzahl der Nuten (1 bis 69) des Blechpakets elektrisch isoliert angeordnet ist, wodurch Spulen der Spulengruppen (128, 130, 132, 134) ausgebildet sind,

    wobei in den Nuten (1 bis 69) wenigstens zwei Abschnitte der elektrischen Leiter von wenigstens einer der Wicklungen (122, 124, 126) zweilagig und voneinander elektrisch isoliert angeordnet sind, **dadurch gekennzeichnet, dass** wenigstens eine erste der Spulengruppen (132) einer der Wicklungen (122, 124, 126) eine erste Anzahl von Spulen aufweist, die von einer zweiten Anzahl von Spulen einer zweiten der Spulengruppen (128, 130, 134) der gleichen Wicklung (122, 124, 126) abweicht, eine erste Anzahl von Spulen einer jeweiligen der Spulengruppen (128, 130, 132, 134) von einer zweiten Anzahl von Spulen einer Spulengruppe (128, 130, 132, 134) der gleichen Phase (K, L, M) verschieden ist.

2. Magnetisch aktive Einheit nach Anspruch 1, **dadurch gekennzeichnet, dass** die Abschnitte der elektrischen Leiter in den Nuten (1 bis 69) in Bezug auf eine Maschinenachse (150) radialen Lagen angeordnet sind, wobei eine jeweilige Lage durch wenigstens einen der elektrischen Leiter gebildet ist.

3. Magnetisch aktive Einheit nach einem der vorhergehenden Ansprüche, **dadurch gekennzeichnet, dass** ein Spuleneingang (+K, +L, +M) jeweiligen der Wicklungen (122, 124, 126) an einer jeweiligen Spule der Oberlage ausgebildet ist.

4. Magnetisch aktive Einheit nach einem der vorhergehenden Ansprüche, **dadurch gekennzeichnet, dass** für jede der Phasen (K, L, M) nur eine einzige jeweilige Wicklung (122, 124, 126) vorgesehen ist.

5. Magnetisch aktive Einheit nach einem der vorhergehenden Ansprüche, **dadurch gekennzeichnet, dass** die Wicklung (122, 124, 126) als zweischichtige Formspulen-Bruchloch-Schleifen- oder Bruchloch-Stab-Wellenwicklung ausgebildet ist.

6. Magnetisch aktive Einheit nach einem der vorhergehenden Ansprüche, **dadurch gekennzeichnet, dass** die Wicklungen (122, 124, 126) als Formspulenwicklungen ausgebildet sind.

7. Ständer (142) für eine rotierende elektrische Maschine (140), mit einer magnetisch aktiven Einheit (100) nach einem der vorhergehenden Ansprüche.

8. Läufer (152) für eine rotierende elektrische Maschine, mit einer magnetisch aktiven Einheit (100) nach einem der Ansprüche 1 bis 6.

9. Rotierende elektrische Maschine (140) mit einem Ständer (142) und einem in einer Öffnung des Ständers (142) drehbar gelagert angeordneten Läufer (152), **dadurch gekennzeichnet, dass** der Ständer (142) nach Anspruch 7 und/oder der Läufer (152) nach Anspruch 8 ausgebildet ist.

10. Rotierende elektrische Maschine nach Anspruch 9, **dadurch gekennzeichnet, dass** die rotierende elektrische Maschine (140) als doppelt gespeiste Asynchronmaschine ausgebildet ist.

11. Windkraftanlage mit zumindest einer rotierenden elektrischen Maschine nach Anspruch 9 oder 10.

**Claims**

1. Magnetically active unit (100) of a multiphase rotating electric machine (140), which has at least two poles (101, 102, 103, 104), comprising

- a laminated core (152), which has a plurality of grooves (1 to 69), and

- at least one winding (122, 124, 126) for a respective one of the phases (L, M, K) of the electric machine (140), wherein the windings (122, 124, 126) each have at least one electrical conductor, which, in order to form coil groups (128, 130, 132, 134) assigned to the respective poles (101, 102, 103, 104), is arranged at least partially in an electrically insulated manner in a plurality of predefined grooves of the plurality of grooves (1 to 69) of the laminated core, as a result of which coils of the coil groups (128, 130, 132, 134) are formed,

wherein at least two sections of the electrical conductors of at least one of the windings (122, 124, 126) are arranged in two layers and in a manner electrically insulated from one another in the grooves (1 to 69), **characterized in that** at least a first of the coil groups (132) of one of the windings (122, 124, 126) has a first number of coils that is different to a second number of coils of a second of the coil groups (128, 130, 134) of the same winding (122, 124, 126), a first number of coils of a respective group of the coil groups (128, 130, 132, 134) being different to a second number of coils of a coil group (128, 130, 132, 134) of the same phase (K, L, M).

2. Magnetically active unit according to Claim 1, **characterized in that** the sections of the electrical conductors are arranged in the grooves (1 to 69) in layers that are radial to a machine axis (150), wherein a respective layer is formed by at least one of the electrical conductors.

3. Magnetically active unit according to either of the preceding claims, **characterized in that** a coil input (+K, +L, +M) of respective windings of the windings (122, 124, 126) is formed on a respective coil of the upper layer.

4. Magnetically active unit according to one of the preceding claims, **characterized in that** only a single respective winding (122, 124, 126) is provided for each of the phases (K, L, M).

5. Magnetically active unit according to one of the preceding claims, **characterized in that** the winding (122, 124, 126) is in the form of a two-layer preformed coil fractional-slot lap winding or a fractional-slot bar wave winding.

6. Magnetically active unit according to one of the preceding claims, **characterized in that** the windings (122, 124, 126) are in the form of preformed coil windings.

7. Stator (142) for a rotating electric machine (140), having a magnetically active unit (100) according to one of the preceding claims.

8. Rotor (152) for a rotating electric machine, having a magnetically active unit (100) according to one of Claims 1 to 6.

9. Rotating electric machine (140) having a stator (142) and having a rotor (152) arranged in a rotatably mounted manner in an opening of the stator (142), **characterized in that** the stator (142) is designed according to Claim 7 and/or the rotor (152) is designed according to Claim 8.

10. Rotating electric machine according to Claim 9, **characterized in that** the rotating electric machine (140) is in the form of a doubly fed asynchronous machine.

11. Wind turbine having at least one rotating electric machine according to Claim 9 or 10.

**Revendications**

1. Unité magnétiquement active (100) d'une machine électrique tournante polyphasée (140), laquelle comporte au moins deux pôles (101, 102, 103, 104), comprenant

- un noyau feuilleté (152), lequel comporte une pluralité d'encoches (1 à 69), et

- au moins un enroulement (122, 124, 126) pour l'une respective des phases (L, M, K) de la machine électrique (140), les enroulements (122, 124, 126) comportant respectivement au moins un conducteur électrique qui, pour former des groupes de bobines (128, 130, 132, 134) associés aux pôles respectifs (101, 102, 103, 104), est disposé de manière isolée électriquement au moins partiellement dans plusieurs encoches prédéfinies de la pluralité d'encoches (1 à 69) du noyau feuilleté, pour ainsi former des bobines des groupes de bobines (128, 130, 132, 134),

dans laquelle, dans les encoches (1 à 69), au moins deux parties des conducteurs électriques d'au moins l'un des enroulements (122, 124, 126) sont disposées en deux couches et isolées électriquement l'une de l'autre, **caractérisée en ce qu'**au moins un premier des groupes de bobines (132) de l'un des enroulements (122, 124, 126) comporte un premier nombre de bobines qui diffère d'un deuxième nombre de bobines d'un deuxième des groupes de bobines (128, 130, 134) du même enroulement (122, 124, 126), un premier nombre de bobines de l'un respectif des groupes de bobines (128, 130, 132, 134) étant différent d'un deuxième nombre de bobines d'un groupe de bobines (128, 130, 132, 134) de la même phase (K, L, M).

**2.** Unité magnétiquement active selon la revendication 1, **caractérisée en ce que** les parties des conducteurs électriques dans les encoches (1 à 69) sont disposées dans des couches radiales par rapport à un axe de machine (150), une couche respective étant formée par au moins l'un des conducteurs électriques.

**3.** Unité magnétiquement active selon l'une quelconque des revendications précédentes, **caractérisée en ce qu'**une entrée de bobine (+K, +L, +M) de chacun des enroulements (122, 124, 126) est formée sur une bobine respective de la couche supérieure.

**4.** Unité magnétiquement active selon l'une quelconque des revendications précédentes, **caractérisée en ce que**, pour chacune des phases (K, L, M), seul un unique enroulement (122, 124, 126) respectif est prévu.

**5.** Unité magnétiquement active selon l'une quelconque des revendications précédentes, **caractérisée en ce que** l'enroulement (122, 124, 126) est réalisé sous la forme d'un enroulement à deux couches à bobines préformées à pas fractionnaire imbriqué ou à barres à pas fractionnaire ondulé.

**6.** Unité magnétiquement active selon l'une quelconque des revendications précédentes, **caractérisée en ce que** les enroulements (122, 124, 126) sont réalisés sous la forme d'enroulements à bobines préformées.

**7.** Stator (142) pour une machine électrique tournante (140), comportant une unité magnétiquement active (100) selon l'une quelconque des revendications précédentes.

**8.** Rotor (152) pour une machine électrique tournante, comportant une unité magnétiquement active (100) selon l'une quelconque des revendications 1 à 6.

**9.** Machine électrique tournante (140) comprenant un stator (142) et un rotor (152) monté rotatif dans une ouverture du stator (142), **caractérisée en ce que** le stator (142) est réalisé selon la revendication 7 et/ou le rotor (152) est réalisé selon la revendication 8.

**10.** Machine électrique tournante selon la revendication 9, **caractérisée en ce que** la machine électrique tournante (140) est réalisée sous la forme d'une machine asynchrone à double alimentation.

**11.** Éolienne comprenant au moins une machine électrique tournante selon la revendication 9 ou 10.

# FIG 1

EP 3 797 467 B1

FIG 2

EP 3 797 467 B1

FIG 3

FIG 4

**EP 3 797 467 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012202735 A1
- EP 2940860 A1